# EUROPEAN PATENT SPECIFICATION

(11) **EP 4 345 532 B1**
(45) Date of publication and mention of the grant of the patent: **03.09.2025**
(21) Application number: 23199927.7
(22) Date of filing: 27.09.2023
(51) Int. Cl.: G02C 1/04, G02C 11/04, G02C 11/00

(54) **LENS HOLDING DEVICE**
LINSENHALTEVORRICHTUNG
DISPOSITIF DE MAINTIEN DE LENTILLE

(30) Priority: 27.09.2022 US 202263410563 P
(43) Date of publication of application: 03.04.2024
(73) Proprietor: Metrex Research LLC, Brea, CA 92821 (US)
(72) Inventor: Stukas, Kaylee Paige, Brea, 92821 (US); Vanden Brook, Mitchell David, Brea, 92821 (US)
(74) Representative: Schlee, Alexander Richard

(56) References cited:
- EP-A1- 2 607 943
- CN-A- 112 540 466
- JP-A- 2017 129 670
- US-A- 5 587 747
- US-A1- 2013 293 829
- US-A1- 2016 193 070

## Description

### Technical Field

The present disclosure relates generally to lens holding devices. In particular, some implementations relate to an eyewear device having a semi-rimless frame that one or more transparencies, which may include a telescopic loupe, can be secured to.

### Description Of Related Art

Dentists and doctors frequently use eyewear that includes telescopic loupes to more closely see into a patient's mouth or other features on the patient's body. Generally, telescopic loupes are magnifying lenses that are placed through a glasses lens or transparency and then secured into an eyewear frame. Conventional eyewear frames can hold lenses or transparencies by completely encircling the transparency with a full frame, partially encircling the transparency with a semi-rimless frame, or puncturing the transparency with a rimless frame. US Patent Publication US 2013/0293829 A1 describes a glasses assembly including a connecting rod securing lens protrusion in a bridge. US Patent 5,587,747 describes an interchangeable eyeglass system in which lenses are secured via spring-loaded pins received in a ramp. European Patent Publication EP 2 607 943 A1 describes an eyewear frame in which an upper and lower frame are magnetically connected to secure interchangeable lenses. Typically, semi-rimless frames pose challenges for securing transparencies within because they lack the securing features of full frames and rimless frames. For example, semi-rimless frames do not provide support around the entire edge of the transparency, like full frames, and do not securely puncture the transparency, which inhibits movement between the frame and the transparency, like rimless frames. Instead, semi-rimless frames may be secured using friction. Typical semi-rimless frames are bent open to allow for a transparency to be placed in the opening of the semi-rimless frame, which is then closed around a portion of the transparency, resulting in a transparency that is partially encircled by the semi-rimless frame. These typical semi-rimless frames create a problem for transparencies that include telescopic loupes, due to the added weight of the telescopic loupe in the transparency and the inferior securing strength of semi-rimless frames. As such, semi-rimless frames have not previously been an optimal option as lens holding devices for dentists and doctors who require telescopic loupes. What is needed, therefore, is a better system for the securing of transparencies in semi-rimless frames. These and other objects are achieved by the device according to claim 1 and the method according to claim 12. Advantageous further embodiments are claimed in the dependent claims.

### Brief Summary Of The Disclosure

According to various embodiments of the disclosed technology, a lens holding device is disclosed herein. In embodiments, the lens holding device may be an eyewear device comprising one or more transparencies, where each of the one or more transparencies may further comprise a securing protrusion, and a frame configured to receive the one or more transparencies. The frame of the eyewear device may comprise a securing element for securing the one or more transparencies within the frame by clamping the securing protrusions of the one or more transparencies against the frame, and an adjusting means for adjusting the securing element between an unclamped position, in which the one or more transparencies may be placed within the frame, and a clamped position, in which the one or more transparencies may be secured within the frame.

In embodiments, the frame of the eyewear device may be a semi-rimless frame that does not fully encircle a pair of transparencies. Further, the securing element may be housed within a portion of the frame, such that an adjusting means comprising one or more jackscrews, with a threaded shaft and head, can be inserted through the securing element. The securing element may comprise a pair of angled or rounded blocks, each having a threaded hole in which the jackscrews may be received. An angled or curved edge of each block may be positioned to be flush with an angled or curved edge of one of the securing protrusions.

Additionally, the frame of the eyewear device may include one or more recesses, where each of the recesses holds one of the screw heads of the one or more jackscrews such that the screw heads are allowed rotational motion but not translational motion. The rotational motion of the jackscrew, when done in a tightening direction, may move the one or more securing elements upwardly within the frame to secure the transparency.

In embodiments, each of the one or more transparencies may comprise a telescopic loupe.

In further embodiments, the lens holding device may be a semi-rimless eyewear device comprising a semi-rimless frame having a pair of grooves; a pair of transparencies, each comprising an upper edge configured to be received in one of the pair of grooves of the semi-rimless frame, and a securing protrusion extending from the upper edge; a pair of angled or rounded securing blocks housed within the semi-rimless frame, each of the pair of angled or rounded securing blocks having a threaded hole; and a pair of jackscrews housed within the semi-rimless frame, each of the pair of jackscrews comprising a threaded shaft that is received by the threaded

### Brief Description Of The Drawings

The accompanying drawings, which are incorporated in and constitute a part of this specification, illustrate embodiments of the disclosure and, together with a general description of the disclosure given above, and the detailed description given below, serve to explain the principles of the invention. The figures are provided for purposes of illustration only and merely depict typical or example embodiments.
FIG. 1 depicts a perspective view of an example lens holding device with a pair of transparencies including telescopic loupes secured to a semi-rimless frame.
FIG. 2 depicts a lower perspective view of an example lens holding device with a pair of transparencies including telescopic loupes secured to a semi-rimless frame.
FIG. 3 depicts a rear perspective view of an example lens holding device with a pair of transparencies including telescopic loupes secured to a semi-rimless frame.
FIG. 4 depicts a front view of an example lens holding device with a pair of transparencies including telescopic loupes secured to a semi-rimless frame.
FIG. 5 depicts a rear view of an example lens holding device with a pair of transparencies secured to a semi-rimless frame via a securing element with an adjusting means.
FIG. 6 depicts an expanded rear view of an example lens holding device with a pair of transparencies secured to the semi-rimless frame via a pair of securing elements with a pair of adjustment means.
FIG. 7 depicts an expanded view of an example lens holding device with a transparency secured to an exterior edge via an exterior securing protrusion.

### Detailed Description

Lens holding devices may refer to eyewear devices or semi-rimless eyewear frames that hold or secure one or more transparencies. Devices and methods disclosed herein may provide for more secure lens or transparency holding than conventional methods. Lens holding devices may be used to hold transparencies with telescopic loupes and/or transparencies alone (e.g., protective lenses). Transparencies with telescopic or dental loupes are generally used by dentists and doctors to magnify their vision, through magnifying lenses in the loupes, which may improve their ability to see into a patient's mouth or other features on the patient's body. Transparencies with telescopic or dental loupes therein are typically heavier than traditional transparencies as well. Thus, the ability for a frame to hold a transparency with greater securing force is desired.

A problem with conventional semi-rimless eyewear is that they merely secure transparencies with friction, which is limited by the physical properties of the transparencies in relation to the physical properties of the semi-rimless frame. For example, the friction coefficient between a typical transparency and a typical semi-rimless frame has a maximum value, in which any amount of force beyond such resistive friction coefficient would permit movement between the transparency and the semi-rimless frame. In other words, a transparency may be too heavy or too unevenly weighted to remain in place in a semi-rimless frame, i.e., when telescopic loupes are placed in a semi-rimless frame, they are known to slide and dislodge from the frame due to their weight. This can be especially problematic for dentists and doctors as telescopic loupes are commonly used during surgical procedures alongside more routine visits. In other words, typical semi-rimless eyewear devices can be dangerous to patients due to an increased likelihood of a heavier transparency comprising a telescopic loupe becoming dislodged from the semi-rimless frame and injuring the patient or obstructing and/or interrupting the dentist's or doctor's vision.

Embodiments of the presently disclosed technology respond to comfort, safety, and operational challenges for dentists, doctors, and other wearers of telescopic loupes when securing the transparencies in a semi-rimless frame. By doing this, embodiments can increase the field of vision for wearers by removing the lower frame (e.g., making the frame semi-rimless), increase the stability of transparencies within the semi-rimless frame, and provide for a simplified method of replacing transparencies in a semi-rimless frame (e.g., switching out transparencies with telescopic loupes with transparencies without telescopic loupes, or replacing scratched or damaged transparencies). Additionally, embodiments of the presently disclosed technology can secure transparencies within a semi-rimless frame with increased strength by, for example, inserting an exterior protrusion of the transparency into a finger on the outer or exterior portion of the frame and then rotating the transparency about the finger such that an interior protrusion can be placed between an angled or rounded securing block and the semi-rimless frame. In such an example, the angled or rounded securing block may be tightened with an adjustment means, such as a jackscrew or other threaded fastener, which may move the angled or rounded securing block translationally upwardly toward a top portion of the frame to clamp the interior protrusion to the bridge of the semi-rimless frame.

In various embodiments, the semi-rimless frame may have a pair of grooves configured to receive an upper edge of the transparency and further secure the transparency in place, reducing lateral motion when the wearer moves the eyewear device. A transparency may include a lens, an eyeglass, a contact, a monocle, an optic, spectacles, or any other transparent or partially transparent viewing material that can be situated in a frame. The groove may further situate the transparency in the frame, such that the groove may guide the transparency into a secure, clamped position when the securing block is tightened.

In various embodiments, the eyewear device may include one or more transparencies, which can be secured to the semi-rimless frame. For example, a pair (i.e., two) of transparencies comprising telescopic loupes may be secured into a semi-rimless frame with a pair of grooves and a central bridge configured to receive an interior protrusion of the pair of transparencies. In such an example, the central bridge may bisect a middle portion of the semi-rimless frame and may rest on a wearer's nose, when the semi-rimless frames are donned by a wearer, to increase balance levels of the frame. In another example, there may be a singular transparency that may be used by jewelers, gemologists, geologists, watch smiths, and similar professionals who may require precise, magnified vision, but may prefer singular eye magnification. In such an example, the single transparency may be received by a single groove in a semi-rimless frame configured to receive a single transparency. In other embodiments, there may be more than two transparencies, which may be used for a variety of visual effects including rotating between different levels of magnification, varying color hues for visual clarity, and cycling between prescriptions to correct visual impairments or irregularities.

In various embodiments, the one or more transparencies may have one or more securing protrusions. The securing protrusion may be extensions or indentations that allow for the transparency to be secured into the semi-rimless frame. Such protrusion may be a bump, lump, knob, hump, ledge, overhang, bulge, protuberance, or similar feature that may extend from the transparency by 1 millimeter (mm) up to 25 mm at one or more edges, corners, sections, and/or areas on the transparency. There may be more than one protrusion on the transparency such that an exterior protrusion may be secured to an exterior area of the semi-rimless frame and an interior protrusion may secure to the bridge of the semi-rimless frame. There may be other protrusions secured to other portions of the semi-rimless frame.

In various embodiments, the semi-rimless frame may have one or more angled or rounded securing blocks or securing wedges that are disposed on the interior bridge of the semi-rimless frame. The one or more securing blocks or wedges may have a hole vertically bored through said block or wedge. The vertically bored hole may be threaded, for example, to receive a threaded jackscrew or other threaded fastener, or may be flush, for example, to receive a securing rivet. The one or more securing blocks may move vertically or at an angle via the jackscrew or other threaded fastener, and may clamp the securing protrusion of the transparency to the semi-rimless frame.

In various embodiments, the one or more securing blocks may be adjusted via an adjustment means. The adjustment means may be a jackscrew, other threaded fastener, rivet, or other repeatably adjustable or fastening connection. When a jackscrew is used, the jackscrew may comprise a threaded shaft that is received by the threaded hole of the one or more securing blocks. The jackscrew may also be rotated in a tightening direction to raise the one or more securing blocks and in a loosening direction to lower the one or more securing blocks. In such an example, the head of the j ackscrew may be secured in a recess (discussed below), such that the head of the jackscrew does not translationally move, but instead is limited to rotational movement. By limiting the jackscrew to rotational movement, the securing block may translationally move in a vertical fashion to secure the block against the one or more protrusions, thus pressing the opposing edge of the protrusion against one of the grooves of the semi-rimless frame. The jackscrew may have a righthanded thread or a lefthanded thread and one skilled in the art would understand that the tightening direction may be different with a righthand threaded jackscrew than a lefthand threaded jackscrew. The one or more transparencies may be secured with other fasteners in a similar manner to the jackscrews as described.

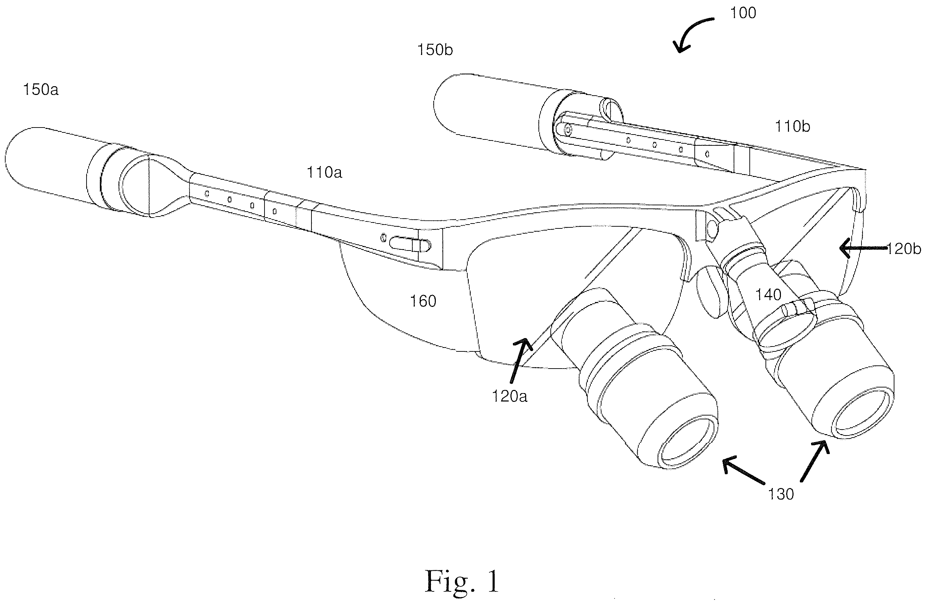

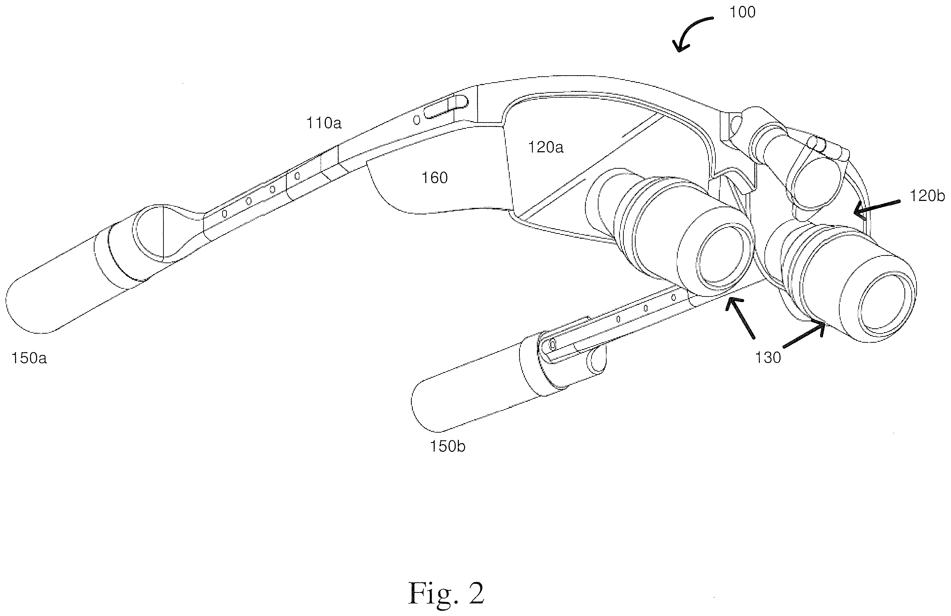

With reference now to the figures, FIGS. 1 and 2 depict a perspective view and a lowered perspective view, respectively, of an example lens holding device with a pair of transparencies including telescopic loupes secured to a semi-rimless frame.

According to various embodiments of the present disclosure, the semi-rimless eyewear device 100 may include a semi-rimless frame 110a, 110b (110a being a right side of the semi-rimless eyewear device and 110b being a left side of the semi-rimless eyewear deice separated by a central portion or bridge of the semi-rimless eyewear device, collectively, "110") that may be worn in a similar manner to eyeglasses. The semi-rimless frame 110 may comprise one or more sections, such that a first side of the semi-rimless frame 110a can fold inwardly and a second side of the semi-rimless frame 110b can fold inwardly across the already folded first side. Either side may fold first and either non-folded side may be crossed over the first folded side. The semi-rimless frame 110 may have a central portion comprising a bridge (discussed below) that receives one or more transparencies 120a, 120b (collectively, "120"). The central portion may be connected to the first side 110a and second side 110b and form a third side, with which the first side 110a and second side 110b can fold toward. The one or more transparencies 120 may include telescopic loupes 130 that may magnify the vision of a wearer of the semi-rimless eyewear device 100. The semi-rimless frame 110 may also include a light 140 that may emit a full-beam light, dampened light, and/or colored light, which may further assist dentists and doctors when viewing a patient. The light may include an attachment feature and a flashlight, and may be secured to the semi-rimless frame 110 at a light securing port (discussed below). The flashlight may be internally wired to one or more batteries 150a, 150b (collectively, "150") located at the base or tail of the semi-rimless frame 110 (e.g., the end of each arm 110a, 110b that is away from the front portion of the frame). The wiring may be internal to the semi-rimless frame 110 or external such that it runs alongside the semi-rimless frame 110. In embodiments where the wiring is external to the semi-rimless frame 110, the wiring may be placed through a conduit to protect the wiring or may run exposed from the light to the one or more batteries 150.

In some embodiments, the semi-rimless eyewear device 100 may include a safety glass extension 160, which may extend the eye protection provided by the one or more transparencies 120 around the side of the semi-rimless eyewear device 100. The safety glass extension 160 may run parallel to the first side 110a and/or second side 110b of the semi-rimless frame 110. The safety glass extension 160 may protect the wearer's eyes from exposure to numerous harmful agents in the medical, dental, geological, or similar fields.

According to various embodiments of the present disclosure, the semi-rimless eyewear device 100 may include one or more transparencies 120 that may further each include one or more telescopic loupes 130. The telescopic loupes 130 may be angled downward from horizontal vision, such that a wearer may reduce the distance with which the wearer has to tilt his or her head when looking downward.

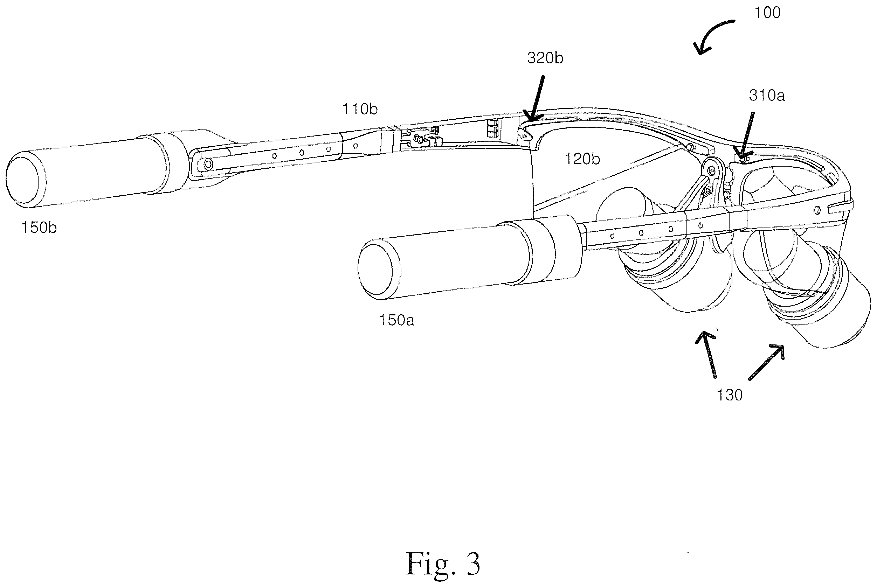

FIG. 3 depicts a rear perspective view of an example lens holding device with a pair of transparencies including telescopic loupes secured to a semi-rimless frame.

According to various embodiments of the present disclosure, the semi-rimless eyewear device 100 may have transparencies 120 including telescopic loupes 130 attached to the semi-rimless frame 110 via a protrusion extending from the upper edge of the transparency 120. In various embodiments, the transparencies 120 may have one or more protrusions. For example, a transparency may have an interior protrusion 310a and an exterior protrusion 320b ("a" and "b" may be used to designate a first side of the frame and a second side of the frame, and one skilled in the art would understand that each side may include an interior protrusion and an exterior protrusion, or any combination thereof). In such an example, the interior protrusion 310a may be clamped between a securing element (described below) and the frame (described below). The exterior protrusion 320b may be slid into a finger (described below) on the semi-rimless frame 110. To secure a transparency 120 within such a semi-rimless frame 110, a wearer may insert or position the exterior protrusion 320b into the finger on an exterior area (area near the wearer's temple) of the semi-rimless frame 110, rotate or pivot the transparency 120b such that the distance between the frame 110 and the interior protrusion 310a decreases, align the upper edge of the transparency with a groove (described below), position the interior protrusion 310a between the securing element and the frame 110, and then tighten the jackscrew or other threaded fastener such that the securing element rises toward the bridge, clamping the interior protrusion between the securing element and the semi-rimless frame 110.

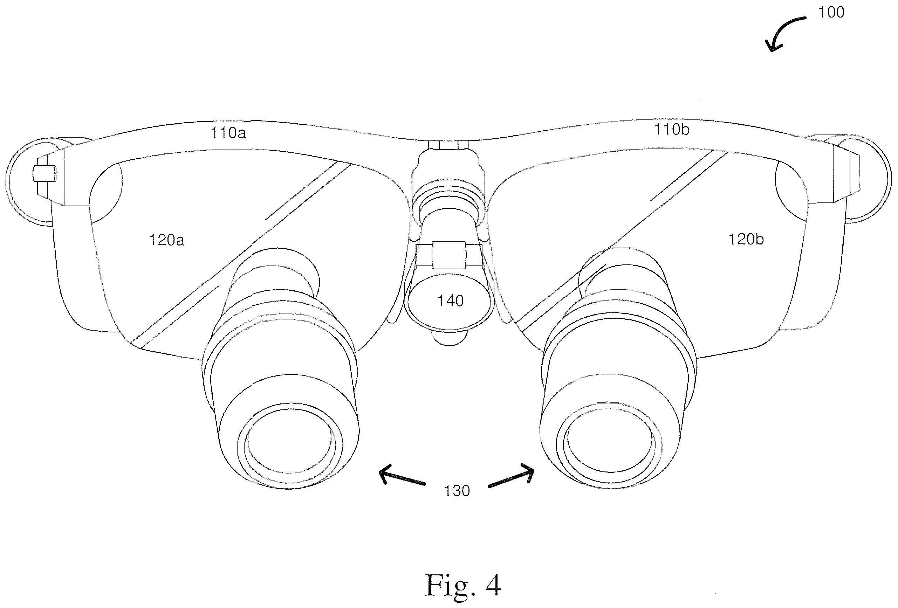

FIG. 4 depicts a front view of an example lens holding device with a pair of transparencies including telescopic loupes secured to a semi-rimless frame.

According to various embodiments of the present disclosure, the semi-rimless eyewear device 100 may have transparencies 120 that are partially enclosed by a frame 110. In embodiments, a semi-rimless frame may include a groove (not shown in FIG. 4) that the transparencies 120 can be secured in. The groove may reduce movement of the transparencies 120 further by reducing the motion of the transparencies 120 in perpendicular relation to the plane of the transparency 120. In embodiments, the frame 110 may fully encircle the transparencies 120. In further embodiments, the frame 110 may partially encircle the transparencies 120 such that one or more sides/edges of the transparencies 120 are disposed in the frame 110 and at least one side or edge of the transparency 120 is unencumbered by the semi-rimless frame. In further embodiments, the frame 110 may puncture the transparency 120 and not encircle any side of the transparency, such that the frame 110 is rimless.

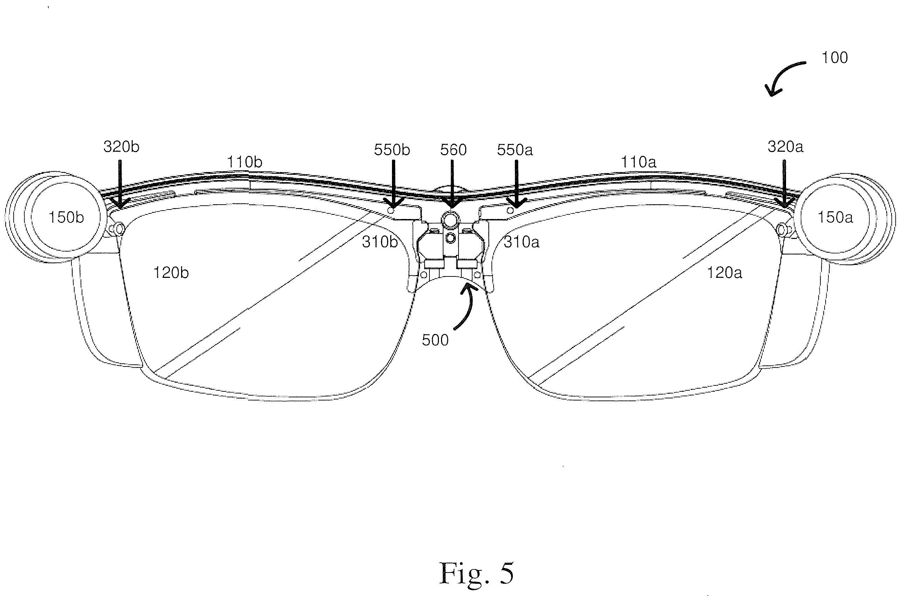

FIG. 5 depicts a rear view of an example lens holding device with a pair of transparencies secured to a semi-rimless frame via a securing element with an adjusting means.

According to various embodiments of the present disclosure, the semi-rimless eyewear device 100 may have one or more transparencies 120 secured into a semi-rimless frame 110. As described in relation to FIG. 3, the one or more transparencies 120 may be secured into the semi-rimless frame 110 on either side of the upper edge of the transparencies 120 via an interior and/or exterior protrusion. In embodiments, there may be an interior protrusion 310a, 310b (collectively "310") and an exterior protrusion 320a, 320b (collectively "320"). Some embodiments may have an interior protrusion 310 without an exterior protrusion 320. Some embodiments may have an exterior protrusion 320 without an interior protrusion 310.

The interior protrusions 310 and exterior protrusions 320 may be located along a top edge of the one or more transparencies 120. The interior protrusions 310 and exterior protrusions 320 may also be located along other edges of the transparencies 120, so long as a semi-rimless frame 110 is configured to receive the interior protrusions 310 and exterior protrusions 320 into securing elements on the frame. A wearer of the lens holding device 100 may be able to place the one or more transparencies 120 into the semi-rimless frame by first placing the interior protrusion 310 into the securing elements and then place the exterior protrusion 320 into the securing finger. Alternatively, the wearer may first place the exterior protrusion 320 into the securing finger and then place the interior protrusion 310 into the securing element. Other operations may be possible and one skilled in the art would understand that further operations may be included when securing the one or more transparencies into the semi-rimless frame.

As depicted in FIG. 5, the upper edge of the transparencies 120 may be inserted or positioned into one or more grooves 550a, 550b (collectively "550") along an underside of the center portion of the semi-rimless frame 110 on opposing sides of the bisecting bridge. The one or more grooves 550 may run the entire length of the upper edge of the transparencies 120 or may run a portion of the length of the upper edge of the transparency 120. Some embodiments may forego the grooves 550 and secure the one or more transparencies 120 with the interior protrusions 310 and/or exterior protrusions 320.

In various embodiments, there may be a light securing port 560 on the semi-rimless frame 110. The light securing port 560 may be configured to hold and secure the light 140 of FIG. 1. The light securing port 560 may be internally and/or electrically coupled to the batteries 150, such that the connection of the light 140 to the light securing port 560 creates an electronical connection from the batteries 150 to the light 140.

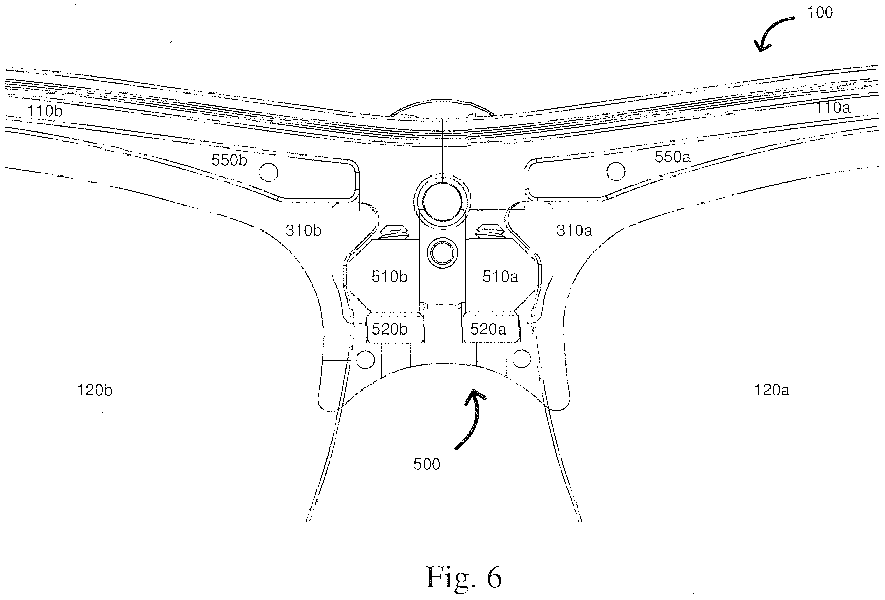

In embodiments, the semi-rimless frame 110 may include a securing portion in the bridge 500. The securing portion in the bridge 500 may be configured to adjustably and/or repeatably secure the transparencies 120 to the semi-rimless frame 110. The securing portion in the bridge 500 is discussed in relation to FIG. 6.

FIG. 6 depicts an expanded view of an example lens holding device with a pair of transparencies secured to the semi-rimless frame via a pair of securing elements with a pair of adjustment means.

According to various embodiments of the present disclosure, a semi-rimless eyewear device 100 may have a securing portion in the bridge 500 of the semi-rimless frame 110 that secures the one or more transparencies 120 to the semi-rimless frame 110. The securing portion in the bridge 500 of the semi-rimless frame 110 may include one or more securing elements 510a, 510b (collectively "510") in the form of angled or rounded securing blocks that are housed within the semi-rimless frame 110. The securing blocks 510 may be adjustable such that they move up and/or down or in parallel to the bridge of the semi-rimless frame 110. The securing blocks 510 may have an angled or rounded side, which may be configured to receive the interior protrusion 310 of the one or more transparencies 120. The securing element may also be rounded with a mating (or form fitting) protrusion. The side of the securing blocks 510 that contacts the interior protrusion 310 may be other shapes besides a flat angle or curve; any shape block that allows for pressure to be applied to the interior protrusion 310 such that the block secures the associated transparency to the semi-rimless frame may be used. The securing blocks may, for example, have a height between 1 mm and 40 mm, a width of 1 mm to 30 mm, and a sloping angle or curve greater than 0 degrees and less than 90 degrees. In some embodiments, the sloping angle or curve may be greater than 10 degrees and less than 80 degrees. In further embodiments, the sloping angle or curve may be greater than 20 degrees and less than 70 degrees. In other embodiments, the sloping angle or curve may be approximately 45 degrees.

The securing blocks 510 may have a hole bored through approximately the vertical center of the securing block 510 (approximately the vertical center may be the true center of the block or may be closer to one or more edges of the block than other edges of the block). The vertical center may be perpendicular to the light securing port 560 of FIG. 5 and parallel to the movement of the securing blocks 510. The hole bored through the vertical center of the securing block 510 may be threaded, smooth, or otherwise textured. The texture of the bored hole may be configured to receive and/or adjust via an adjustment meansthe vertical height of the securing block. For example, the hole in the securing blocks 510 may be threaded to allow a complementarily threaded jackscrew (the adjustment means 520) to be received by the securing blocks 510. In another example, the hole may untextured, allowing a rivet (a different adjustment means 520) to be received by the securing blocks 510.

The adjustment means 520a, 520b (collectively "520") may be a jackscrew, other fastener, rivet, anchor, or similar securing and/or connecting piece. The adjustment means 520 may be placed through the securing block 510 such that a head of the adjustment means 520, for example, a circular screw head, is partially or fully exposed, allowing a wearer to tighten or loosen the adjustment means 520.

Once the adjustment means 520 is inserted through the securing block 510, the interior protrusion 310 may be slid between the angled or curved portion of the securing block 510 and the groove 550 on the semi-rimless frame 110. The wearer can then tighten the adjustment means 520 from an unclamped position (wherein the securing elements 510 are not tightened via the adjustment means 510, i.e., no or minimal pressure is applied to the protrusions) to a clamped position to secure the interior protrusion 310 between the securing block 510 and the groove 550. The unclamped position allows for a wearer to place the one or more transparencies within the frame. The clamped position secures the one or more transparencies within the frame. The clamped position may be achieved when an upper surface of the securing block 510 is in contact with a lower surface of the protrusion, and pressure is applied with sufficient force to secure the protrusion to the semi-rimless frame 110. This can happen, for example, when a jackscrew is used as the adjustment means 520 and the securing blocks 510 have threaded holes bored through their approximate vertical center. In such an example, once the interior protrusion 310 has been placed between the securing block 510 and the groove 550, the wearer can tighten the jackscrew with a screwdriver, which may raise or otherwise move the securing block vertically upward toward the bridge of the semi-rimless frame, applying pressure onto the edge of the interior protrusion 310 such that it is clamped between the securing block 510 and the groove 550.

Additionally, the semi-rimless frame 110 may include one or more recesses (not shown) that hold the heads of the jackscrews or adjustment means 520. The recesses may allow for the jackscrews to rotate, i.e., in a tightening or loosening direction, but not move laterally or translationally. The recesses may be open or depressed by 1 mm to 10 mm such that the head of the jackscrew 520 may be entirely or partially exposed.

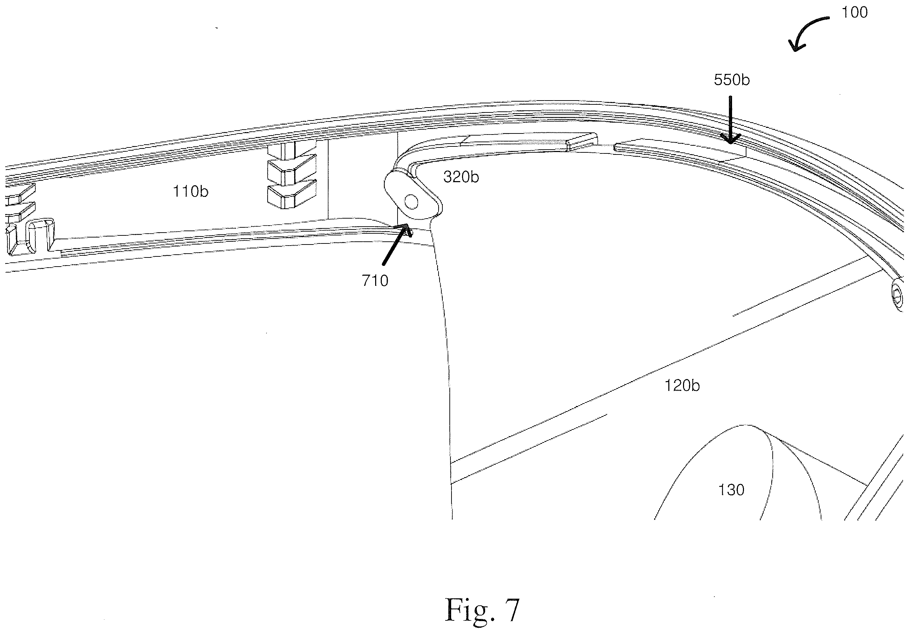

FIG. 7 depicts an expanded view of an example lens holding device with a transparency secured to an exterior edge via an exterior securing protrusion.

According to various embodiments of the present disclosure, the semi-rimless eyewear device 100 may include a finger 710 formed into the frame 110. The finger 710 may create a capturing area that may be configured to receive the exterior protrusion 320 of the one or more transparencies 120. The wearer, when placing or replacing transparencies 120 in the semi-rimless frame 110, may first place the exterior protrusion 320 of the transparency 120 into the capturing area of the semi-rimless frame 110, such that a portion of the exterior protrusion 320 is secured by the finger 710 attached to the semi-rimless frame 110, and then pivot the transparency about the finger to secure the interior protrusion to the frame with the securing blocks.

The semi-rimless eyewear device may increase the field of vision for wearers by removing the lower frame (e.g., making the frame semi-rimless), increase the stability of transparencies within the semi-rimless frame, and provide for a simplified method of replacing transparencies in a semi-rimless frame, all improving the viability of semi-rimless frames being used for telescopic loupes according to the present disclosure. "one or more" or the like; and adjectives such as "conventional," "traditional," "normal," "standard," "known." Terms of similar meaning should not be construed as limiting the item described to a given time period or to an item available as of a given time. Instead, they should be read to encompass conventional, traditional, normal, or standard technologies that may be available or known now or at any time in the future. Where this document refers to technologies that would be apparent or known to one of ordinary skill in the art, such technologies encompass those apparent or known to the skilled artisan now or at any time in the future.

It should be noted that the term "optimal" and the like as used herein can be used to mean making or achieving performance as effective or perfect as possible. However, as one of ordinary skill in the art reading this document will recognize, perfection cannot always be achieved. Accordingly, these terms can also encompass making or achieving performance as good or effective as possible or practical under the given circumstances, or making or achieving performance better than that which can be achieved with other settings or parameters.

The presence of broadening words and phrases such as "one or more," "at least," "but not limited to" or other like phrases in some instances shall not be read to mean that the narrower case is intended or required in instances where such broadening phrases may be absent. The use of the term "component" does not imply that the aspects or functionality described or claimed as part of the component are all configured in a common package. Indeed, any or all of the various aspects of a component can be combined in a single package or separately maintained and can further be distributed in multiple groupings or packages or across multiple locations.

While the present invention has been illustrated by the description of one or more embodiments thereof, and while the embodiments have been described in considerable detail, they are not intended to restrict or in any way limit the scope of the appended claims to such detail. The various features shown and described herein may be used alone or in any combination. Additional advantages and modifications will readily appear to those skilled in the art. The invention in its broader aspects is therefore not limited to the specific details, representative apparatus and method and illustrative examples shown and described. The scope of the invention is set in the appended claims.

## Claims

1. An eyewear device (100) comprising:
one or more transparencies (120), each of the one or more transparencies (120) comprising one or more securing protrusions (310, 320); and
a frame (110) configured to receive the one or more transparencies (120), the frame (110) comprising:
one or more blocks (510) for securing the one or more transparencies (120) within the frame (110) by clamping the one or more securing protrusions (310) of the one or more transparencies (120) against the frame (110);
**characterized in that**:
the frame (110) further comprises one or more jackscrews (520) for adjusting the one or more blocks (510) between an unclamped position, in which the one or more transparencies (120) may be placed within the frame (110), and a clamped position, in which the one or more transparencies (120) are secured within the frame (110);
each of the one or more jackscrews (520) comprises a threaded shaft and a screw head; and
each of the one or more blocks (510) has a threaded hole in which the threaded shaft of one of the jackscrews (520) is received.

2. The eyewear device (100) of claim 1, wherein the frame (110) is a semi-rimless frame (110) that does not fully encircle the one or more transparencies (120).

3. The eyewear device (100) of claim 1, wherein the one or more blocks (510) are housed within a portion of the frame (110).

4. The eyewear device (100) of claim 1, wherein:
the frame (110) comprises one or more recesses; and
each of the one or more recesses holds at least one screw head of the one or more jackscrews (520) such that the at least one screw head is allowed rotational motion,
more preferably wherein rotation of the one or more jackscrews (520) in a tightening direction moves the one or more blocks (510) upwardly within the frame (110) to secure the one or more transparencies (120).

5. The eyewear device (100) of claim 1, wherein each of the one or more transparencies (120) further comprises a telescopic loupe (130).

6. The eyewear device (100) according to claim 2 optionally combined with claim 3 and/or 4, wherein:
the semi-rimless frame (110) has a pair of grooves (550);
the one or more transparencies (120) are a pair of transparencies (120), each comprising an upper edge configured to be received in one of the pair of grooves (550) of the semi-rimless frame (110), wherein the one or more securing protrusions (310) extend from the upper edge;
the one or more blocks (510) are a pair of blocks (510);
the one or more jackscrews (520) are a pair of jackscrews (520) housed within the semi-rimless frame (110); and
the one or more securing protrusions (310) of each of the pair of transparencies (120) is configured to be clamped between an upper surface of one of the pair of securing blocks (510) and a portion of the semi-rimless frame (110) within one of the pair of grooves (550) as the pair of jackscrews (520) are rotated in the tightening direction.

7. The eyewear device (100) of claim 6, wherein:
each of the pair of blocks (510) is housed within a bridge portion (500) of the semi-rimless frame (110); and
the one or more securing protrusions (310) of each of the pair of transparencies (120) extend interiorly from the upper edge.

8. The eyewear device (100) of claims 4 and 6, wherein:
the one or more recesses is a pair of screw head recesses, each configured to hold at least one screw head of the pair of jackscrews (520) such that the at least one screw head is allowed rotational motion but not translational motion; and
the semi-rimless frame (110) further comprises a pair of securing-block recesses, each configured to hold one of the pair of blocks (510) such that the blocks (510) are allowed translational motion but not rotational motion.

9. The eyewear device (100) of claim 6, wherein:
the securing protrusion (310) of each of the pair of transparencies (120) has a lower surface; and
each of the pair of blocks (510) has an upper surface configured to mate with the lower surface of one of the one or more securing protrusions (310).

10. The eyewear device (100) of claim 6, wherein:
each of the pair of transparencies (120) further comprises a second securing protrusion (320) extending exteriorly from the upper edge; and
the semi-rimless frame (110) further comprises a pair of fingers (710), each configured to engage one of the second securing protrusions (320) of the pair of transparencies (120) in order to secure an exterior portion of each of the pair of transparencies (120) to the semi-rimless frame (110).

11. The eyewear device (100) of claim 6, wherein each of the pair of transparencies (120) further comprises a telescopic loupe (130).

12. A method of securing a transparency (120) within an eyewear device (100), the method comprising:
inserting an upper edge of a transparency (120) into a groove (550) formed in a frame (110), the frame (110) comprising a block (510) for securing the transparency (120) within the frame (110) and a jackscrew (520) for adjusting the block (510), the jackscrew (520) comprising a threaded shaft and a screw head, the block (510) having a threaded hole in which the threaded shaft of the jackscrew (520) is received; and
tightening the jackscrew (520) so as to adjust the block (510) into a clamped position in which a securing protrusion (310) of the transparency (120) is clamped against the frame (110),
preferably wherein the transparency (120) comprises a telescopic loupe (130).

13. The method of claim 12, wherein inserting the upper edge of the transparency (120) into the groove (550) formed in the frame (110) comprises positioning the securing protrusion (310) of the transparency (120) between one or more upper surfaces of the block (510) and a portion of the frame (110) within the groove (550).

14. The method of claim 13, wherein inserting the upper edge of the transparency (120) into the groove (550) formed in the frame (110) further comprises positioning a second securing protrusion (320) of the transparency (120) against a finger (710) formed in the frame (110) in order to secure an exterior portion of the transparency (120) to the frame (110).

15. The method of claim 14, wherein inserting the upper edge of the transparency (120) into the groove (550) formed in the frame (110) further comprises pivoting the transparency (120) about the second securing protrusion (320) after the second securing protrusion (320) has been positioned against the finger (710) formed in the frame (110).

## Patentansprüche

1. Eine Brillenvorrichtung (100) mit:
einem oder mehreren transparenten Elementen (120), wovon jedes der einen oder mehreren transparenten Elemente (120) einen oder mehrere Befestigungsvorsprünge (310, 320) aufweist; und
einem Rahmen (110), welcher zum Aufnehmen der einen oder mehreren transparenten Elemente (120) ausgebildet ist, wobei der Rahmen (110) versehen ist mit:
einem oder mehreren Blöcken (510) zum Befestigen der einen oder mehreren transparenten Elemente (120) in dem Rahmen (110) durch Festklemmen der einen oder mehreren Befestigungsvorsprünge (310) der einen oder mehreren transparenten Elemente (120) gegen den Rahmen (110);
**dadurch gekennzeichnet, dass**:
der Rahmen (110) weiter versehen ist mit einer oder mit mehreren Positionierungsschrauben (520) zum Positionsjustieren der einen oder mehreren Blöcke (510), wobei die Blöcke zwischen einer nicht festgeklemmten Position, in welcher die einen oder mehreren transparenten Elemente (120) in dem Rahmen (110) platziert werden können, und einer festgeklemmten Position verstellbar sind, in welcher die einen oder mehreren transparenten Elemente (120) innerhalb des Rahmens (110) befestigt sind;
jede der einen oder mehreren Positionierungsschrauben (520) einen Gewindeschaft und einen Schraubenkopf aufweist; und
jeder der einen oder mehreren Blöcke (510) eine Gewindebohrung aufweist, welche den Gewindeschaft der Positionierungsschrauben (520) aufnimmt.

2. Die Brillenvorrichtung (100) nach Anspruch 1, wobei der Rahmen (110) ein Halberrandrahmen (110) ist, welche die einen oder mehreren transparenten Elemente (120) nicht vollständig umschließt.

3. Die Brillenvorrichtung (100) nach Anspruch 1, wobei die einen oder mehreren Blöcke (510) innerhalb eines Teils des Rahmens (110) untergebracht sind.

4. Die Brillenvorrichtung (100) nach Anspruch 1, wobei:
der Rahmen (110) einen oder mehrere Ausnehmungen aufweist; und
jede der einen oder mehreren Ausnehmungen wenigstens einen Schraubenkopf der einen oder der mehreren Positionierungsschrauben (520) hält, sodass der wenigstens eine Schraubenkopf eine Rotationsbewegung ausführen kann,
besonders bevorzugt, wobei die Drehbewegung der einen oder mehreren Positionierungsschrauben (520) in eine Festziehrichtung die einen oder mehreren Blöcke (510) innerhalb des Rahmens (110) nach oben bewegt, um die einen oder mehreren transparenten Elemente (120) so zu befestigen.

5. Die Brillenvorrichtung (100) nach Anspruch 1, wobei jede der einen oder mehreren transparenten Elemente (120) weiter versehen ist mit einer Teleskoplupe (130).

6. Die Brillenvorrichtung (100) nach Anspruch 2, vorzugsweise kombiniert mit Anspruch 3 und/oder Anspruch 4, wobei:
der Halbrandrahmen (110) ein Paar von Nuten (550) aufweist;
die einen oder mehreren transparenten Elemente (120) ein Paar von transparenten Elementen (120) ist, wovon jedes eine obere Kante aufweist, welche zur Aufnahme in der einen oder den mehreren Nuten (550) des Halbrandrahmens (110) ausgebildet ist, wobei sich die einen oder mehreren Befestigungsvorsprünge (310) von der oberen Kante ausgehend erstrecken;
die einen oder mehreren Blöcke (510) ein Paar von Blöcken (510) sind;
die einen oder mehreren Positionierungsschrauben (520) ein Paar von Positionierungsschrauben (520) sind, welche in dem Halbrahmen (110) untergebracht sind; und
die einen oder mehreren Befestigungsvorsprünge (310) von jedem der Paare von transparenten Elementen (120) zwischen einer oberen Fläche der einen oder mehreren Befestigungsblöcke (510) und einem Teil des Halbrahmens (110) innerhalb der einen oder mehrere Nuten (550) festgeklemmt werden,wenn das Paar von Positionierungsschrauben (520) in eine Festziehrichtung gedreht werden.

7. Die Brillenvorrichtung (100) nach Anspruch 6, wobei:
jeder der Blöcke von dem Paar von Blöcken (510) innerhalb eines Brückenteils (500) des Halbrahmens (110) untergebracht sind; und
sich die einen oder mehreren Befestigungsvorsprünge (310) von jedem der transparenten Elemente des Paars von transparenten Elementen (120) von dem der oberen Kante ausgehend nach innen erstrecken.

8. Die Brillenvorrichtung (100) nach Ansprüchen 4 und 6, wobei:
die einen oder mehreren Ausnehmungen ein Paar von Schraubenkopf-Ausnehmungen sind, welche dazu ausgebildet sind, jeweils wenigstens einen Schraubenkopf des Paars von Positionierungsschrauben (520) derart aufzunehmen, dass der jeweilige, wenigstens eine Schraubenkopf eine Rotationsbewegung, aber keine Translationsbewegung ausführen kann; und
der Halbrahmen (110) weiter versehen ist mit einem Paar von Befestigungsblock-Ausnehmungen, wovon jede zum Aufnehmen eines jeweiligen des Paars von Blöcken (510) ausgebildet ist, sodass die Blöcke (510) eine Translationsbewegung aber keine Rotationsbewegung ausführen können.

9. Die Brillenvorrichtung (100) nach Anspruch 6, wobei:
die Sicherungsvorsprünge (310) von jedem der transparenten Elemente des Paars von transparenten Elementen (120) jeweils eine untere Fläche aufweisen; und
jeder der Blöcke des Paars von Blöcken (510) eine obere Fläche aufweist, welche mit der jeweiligen untere Fläche der einen oder mehreren Befestigungsvorsprünge (310) zusammenwirkt.

10. Die Brillenvorrichtung (100) nach Anspruch 6, wobei:
jedes der transparenten Elemente des Paars von transparenten Elementen (120) weiter versehen ist mit einem zweiten Sicherungsvorsprung (320), welcher sich ausgehend von der oberen Kante nach außen erstreckt; und
der Halbrahmen (110) weiter versehen ist mit einem Paar von Fingern (710), wovon jeder der Finger zum Eingriff in einen der zweiten Sicherungsvorsprünge (320) des Paars von transparenten Elementen (120) ausgebildet ist, um einen äußeren Teil von jedem der transparenten Elemente des Paars von transparenten Elementen (120) in dem Halbrahmen (110) zu befestigen.

11. Die Brillenvorrichtung (100) nach Anspruch 6, wobei jedes der transparenten Elemente des Paars von transparenten Elementen weiter mit einer Teleskoplupe (130) versehen ist.

12. Ein Verfahren zum Befestigen eines transparenten Elements (120) innerhalb einer Brillenvorrichtung (100), wobei das Verfahren versehen ist mit:
Einsetzen einer oberen Kante eines transparenten Elements (120) in eine Nut (550), welche in einem Rahmen (110) ausgebildet ist, wobei der Rahmen (110) versehen ist mit einem Block zum Befestigen des transparenten Elements (120) innerhalb des Rahmens (110) und mit einer Positionierungsschraube (520) versehen ist, um die Position des Blocks (510) zu justieren, wobei die Positionierungsschraube (520) einen Gewindeschaft und eine Schraubenkopf aufweist, und der Block (510) mit einer Gewindebohrung versehen ist, in welcher der Gewindeschaft der Positionierungsschraube (520) aufgenommen ist; und
Festziehen der Positionierungsschraube (520), um so den Block (510) in eine Festklemmposition zu bewegen, in welcher ein Befestigungsvorsprung (310) des transparenten Elements (120) gegen den Rahmen (110) festgeklemmt ist,
wobei das transparente Element (120) vorzugsweise eine Teleskoplupe (130) aufweist.

13. Das Verfahren nach Anspruch 12, wobei das Einsetzen der oberen Kante des transparenten Elements (120) in die Nut (550), welche in dem Rahmen (110) ausgebildet ist, das Positionieren des Befestigungsvorsprungs (310) des transparenten Elements (120) zwischen einer oder mehreren oberen Flächen des Blocks (510) und einem Teil des Rahmens (110) innerhalb der Nut (550) aufweist.

14. Das Verfahren nach Anspruch 13, wobei das Einsetzen der oberen Kante des transparenten Elements (120) in die Nut (550), welche in dem Rahmen (110) ausgebildet ist, weiter versehen ist mit dem Positionieren eines zweiten Befestigungsvorsprungs (320) des transparenten Elements (120) gegen einen in dem Rahmen (110) ausgebildeten Finger (710), um einen äußeren Teil des transparenten Elements (120) in dem Rahmen (110) zu befestigen.

15. Das Verfahren nach Anspruch 14, wobei das Einsetzen der oberen Kante des transparenten Elements (120) in die Nut (550), welche in dem Rahmen (110) ausgebildet ist, weiter versehen ist mit dem Schwenken des transparenten Elements (120) um den zweiten Befestigungsvorsprung (320), nachdem der zweite Befestigungsvorsprung (320) gegen den in dem Rahmen (110) ausgebildeten Finger (710) positioniert wurde.

## Revendications

1. Dispositif de lunettes (100), comprenant :
un ou plusieurs éléments transparents (120), chacun des un ou plusieurs éléments transparents (120) comprenant une ou plusieurs saillies de fixation (310, 320) ; et
une monture (110) configurée pour recevoir les un ou plusieurs éléments transparents (120), la monture (110) comprenant :
un ou plusieurs blocs (510) pour fixer les un ou plusieurs éléments transparents (120) à l'intérieur de la monture (110) en serrant les une ou plusieurs saillies de fixation (310) des un ou plusieurs éléments transparents (120) contre la monture (110) ;
**caractérisé en ce que**,
la monture (110) comprend en outre une ou plusieurs vis de serrage (520) pour ajuster les un ou plusieurs blocs (510) entre une position desserrée, dans laquelle les un ou plusieurs éléments transparents (120) peuvent être placés à l'intérieur de la monture (110), et une position serrée, dans laquelle les un ou plusieurs éléments transparents (120) sont fixés à l'intérieur de la monture (110) ;
chacune des une ou plusieurs vis de serrage (520) comprend une tige filetée et une tête de vis ; et
chacun des un ou plusieurs blocs (510) présente un trou fileté dans lequel la tige filetée de l'une des vis de serrage (520) est reçue.

2. Dispositif de lunettes (100) selon la revendication 1, dans lequel la monture (110) est une monture demi-cerclée (110) qui n'entoure pas complètement les un ou plusieurs éléments transparents (120).

3. Dispositif de lunettes (100) selon la revendication 1, dans lequel les un ou plusieurs blocs (510) sont logés dans une partie de la monture (110).

4. Dispositif de lunettes (100) selon la revendication 1, dans lequel :
la monture (110) comprend un ou plusieurs évidements ; et
chacun des un ou plusieurs évidements maintient au moins une tête de vis des une ou plusieurs vis de serrage (520) de telle sorte que la au moins une tête de vis se voit autorisée un mouvement de rotation, de manière plus préférée dans lequel une rotation des une ou plusieurs vis de serrage (520) dans une direction de serrage déplace les un ou plusieurs blocs (510) vers le haut à l'intérieur de la monture (110) pour fixer les un ou plusieurs éléments transparents (120).

5. Dispositif de lunettes (100) selon la revendication 1, dans lequel chacune des un ou plusieurs éléments transparents (120) comprend en outre une loupe télescopique (130).

6. Dispositif de lunettes (100) selon la revendication 2 facultativement combinée à la revendication 3 et/ou 4, dans lequel :
la monture demi-cerclée (110) présente une paire de rainures (550) ;
les un ou plusieurs éléments transparents (120) sont une paire d'éléments transparents (120), chacun comprenant un bord supérieur configuré pour être reçu dans l'une de la paire de rainures (550) de la monture demi-cerclée (110), dans lequel les une ou plusieurs saillies de fixation (310) s'étendent à partir du bord supérieur ;
les un ou plusieurs blocs (510) sont une paire de blocs (510) ;
les une ou plusieurs vis de serrage (520) sont une paire de vis de serrage (520) logées dans la monture demi-cerclée (110) ; et
les une ou plusieurs saillies de fixation (310) de chacune de la paire d'éléments transparents (120) sont configurées pour être serrées entre une surface supérieure de l'un de la paire de blocs de fixation (510) et une partie de la monture demi-cerclée (110) à l'intérieur de l'une de la paire de rainures (550) lorsque la paire de vis de serrage (520) sont tournées dans la direction de serrage.

7. Dispositif de lunettes (100) selon la revendication 6, dans lequel :
chacun de la paire de blocs (510) est logé à l'intérieur d'une partie de pont (500) de la monture semi-cerclée (110) ; et
les une ou plusieurs saillies de fixation (310) de chacune de la paire d'éléments transparents (120) s'étendent vers l'intérieur à partir du bord supérieur.

8. Dispositif de lunettes (100) selon les revendications 4 et 6, dans lequel :
les un ou plusieurs évidements sont une paire d'évidements de tête de vis, configurés chacun pour maintenir au moins une tête de vis de la paire de vis de serrage (520) de sorte que la au moins une tête de vis se voit autorisée un mouvement de rotation mais pas un mouvement de translation ; et
la monture semi-cerclée (110) comprend en outre une paire d'évidements de bloc de fixation, chacun configuré pour maintenir l'un de la paire de blocs (510) de telle sorte que les blocs (510) sont autorisés à effectuer un mouvement de translation mais pas un mouvement de rotation.

9. Dispositif de lunettes (100) selon la revendication 6, dans lequel :
la saillie de fixation (310) de chacun de la paire d'éléments transparents (120) présente une surface inférieure ; et
chacun de la paire de blocs (510) présente une surface supérieure configurée pour s'apparier avec la surface inférieure de l'une des une ou plusieurs saillies de fixation (310).

10. Dispositif de lunettes (100) selon la revendication 6, dans lequel :
chacune de la paire d'éléments transparents (120) comprend en outre une seconde saillie de fixation (320) s'étendant vers l'extérieur à partir du bord supérieur ; et
la monture demi-cerclée (110) comprend en outre une paire de doigts (710), configurés chacun pour venir en prise avec l'une des secondes saillies de fixation (320) de la paire d'éléments transparents (120) afin de fixer une partie extérieure de chacune de la paire d'éléments transparents (120) à la monture demi-cerclée (110).

11. Dispositif de lunettes (100) selon la revendication 6, dans lequel chacune de la paire d'éléments transparents (120) comprend en outre une loupe télescopique (130).

12. Procédé de fixation d'un élément transparent (120) à l'intérieur d'un dispositif de lunettes (100), le procédé comprenant les étapes consistant à :
insérer un bord supérieur d'un élément transparent (120) dans une rainure (550) formée dans une monture (110), la monture (110) comprenant un bloc (510) pour fixer l'élément transparent (120) à l'intérieur de la monture (110) et une vis de serrage (520) pour ajuster le bloc (510), la vis de serrage (520) comprenant une tige filetée et une tête de vis, le bloc (510) présentant un trou fileté dans lequel la tige filetée de la vis de serrage (520) est reçue ; et
serrer la vis de serrage (520) de manière à ajuster le bloc (510) dans une position serrée dans laquelle une saillie de fixation (310) de l'élément transparent (120) est serrée contre la monture (110),
de préférence dans lequel la transparence (120) comprend une loupe télescopique (130).

13. Procédé selon la revendication 12, dans lequel l'insertion du bord supérieur de l'élément transparent (120) dans la rainure (550) formée dans la monture (110) comprend un positionnement de la saillie de fixation (310) de l'élément transparent (120) entre une ou plusieurs surfaces supérieures du bloc (510) et une partie de la monture (110) à l'intérieur de la rainure (550).

14. Procédé selon la revendication 13, dans lequel l'insertion du bord supérieur de l'élément transparent (120) dans la rainure (550) formée dans la monture (110) comprend en outre un positionnement d'une seconde saillie de fixation (320) de l'élément transparent (120) contre un doigt (710) formé dans la monture (110) afin de fixer une partie extérieure de l'élément transparent (120) à la monture (110).

15. Procédé selon la revendication 14, dans lequel l'insertion du bord supérieur de l'élément transparent (120) dans la rainure (550) formée dans la monture (110) comprend en outre un pivotement de l'élément transparent (120) autour de la seconde saillie de fixation (320) après que la seconde saillie de fixation (320) ait été positionnée contre le doigt (710) formé dans la monture (110).
